# EUROPÄISCHE PATENTSCHRIFT

(11) **EP 1 217 782 B1**
(45) Veröffentlichungstag und Bekanntmachung des Hinweises auf die Patenterteilung: **09.05.2012**
(21) Anmeldenummer: 01123014.1
(22) Anmeldetag: 26.09.2001
(51) Int. Cl.: H04L 9/08

(54) **Verfahren zur verschlüsselten Datenübertragung und Funkstation dafür**
Method for encrypted data transmission and related radio station
Procédé de transmission de données chiffrées et station radio y relative

(30) Priorität: 21.11.2000 DE 10057637
(43) Veröffentlichungstag der Anmeldung: 26.06.2002
(73) Patentinhaber: ROBERT BOSCH GMBH, 70442 Stuttgart (DE)
(72) Erfinder: Grabow, Wilhelm, Dr., 31139 Hildesheim (DE); Schmedding, Rainer, 31135 Hildesheim (DE); Plumeier, Joerg, 38229 Salzgitter (DE); Kersken, Ulrich, 31199 Diekholzen (DE)

(56) Entgegenhaltungen:
- EP-A- 0 804 012
- EP-A- 0 996 245
- WO-A-99/33076
- DE-A- 19 750 047
- DE-A- 19 905 628
- US-A- 5 864 620
- HYUNSEO OH ET AL: "5.8 GHz DSRC packet communication system for ITS services" 1999, VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, PAGE(S) 2223-2227 , KOREA , XP010352969 ISBN: 0-7803-5435-4 * das ganze Dokument *
- MITTERHUMMER I ET AL: "DATENRUNDFUNK MIT DAB" 1995, FUNKSCHAU, FRANZIS-VERLAG K.G. MUNCHEN, DE, VOL. 67, NR. 22, PAGE(S) 45-48 , DEUTSCHLAND , XP000536509 ISSN: 0016-2841 * das ganze Dokument *
- PATENT ABSTRACTS OF JAPAN Bd. 1996, Nr. 12, 26. Dezember 1996 (1996-12-26) & JP 08 212065 A (NAMCO LTD), 20. August 1996 (1996-08-20)

## Beschreibung

Die vorliegende Erfindung betrifft ein Verfahren zur Übertragung einer Menge von Daten von einer ersten Funkstation an eine zweite Funkstation sowie eine für die Anwendung des Verfahrens geeignete Funkstation.

Bei der Übertragung von gebührenpflichtigen Informationen auf dem Funkweg ergibt sich das Problem, dass der Bereitsteller der Informationen häufig nur unter Schwierigkeiten kontrollieren kann, welches die Empfänger sind, von denen er eine Gebühr beanspruchen kann. Es ist daher für den Bereitsteller von Interesse, vor der Übertragung der kostenpflichtigen Daten von dem Empfänger alle Informationen zu erhalten, die ihn in die Lage versetzen, diesem eine Gebühr in Rechnung zu stellen. Dies birgt jedoch für den Empfänger der Daten das Risiko, dass er für die Übertragung von Daten bezahlt, deren Übertragung jedoch später möglicherweise scheitert, so dass er für seine Zahlung keine Gegenleistung erhält.

Dieses Problem stellt sich z.B. im Bereich der kurzreichweitigen Datenübertragung mit Funkbaken (Dedicated Short Range Communication, DSRC), die mittlerweile in den europäischen Vornormen ENV 12 253, ENV 12 795, EMV 12 834 und ENV ISO 14 906 standardisiert ist. Eine bekannte Anwendung von DSRC ist die automatische Erhebung von Straßenbenutzungsgebühren durch Funkkommunikation zwischen einer Funkbake und einer an einem Fahrzeug mitgeführten, als On-Board-Unit OBU bezeichneten Funkstation.

Es ist mittlerweile eine Reihe von weiteren Diensten festgelegt worden, die mit DSRC übertragen werden können, so z.B. die Übertragung von digitalen Karteninformationen oder von Fahrplaninformationen öffentlicher Verkehrsmittel. Zum Schutz vor unbefugter, d.h. nicht bezahlter Nutzung derartiger Dienste wird eine Verschlüsselung der Daten eingesetzt werden müssen. Insbesondere im Falle digitaler Karteninformation wird es erforderlich sein, große Datenmengen zu übertragen, die bei individueller Anforderung durch eine Fahrzeug-OBU und individueller Übertragung an diese die Übertragungskapazitäten gegenwärtiger DSRC-Systeme sprengen.

Eine Einschränkung der Übertragungskapazität gegenwärtiger DSRC-Systeme ergibt sich daraus, dass bei der Datenübertragung von der OBU zur Bake, dem sogenannten Uplink, die OBU im Transponderverfahren arbeitet. Dabei sendet die Bake im Uplink-Zeitschlitz ein unmoduliertes 5,8 GHz-Trägersignal, welches von der OBU moduliert und zur Bake zurückgesendet wird. Eine Konsequenz dieses Prinzips ist, dass im Uplink-Betrieb die Streckendämpfung doppelt vorhanden ist und deshalb nur geringe Reichweiten zu erzielen sind.

Die EP-A-0804012 offenbart eine Vorrichtung und ein Verfahren zur Übertragung einer Menge von Daten von einer ersten Funkstation zu einer zweiten Funkstation, die eine Datenauswahl durch einen Nutzer ermöglicht.

Die WO 99/33076 A offenbart ein Verfahren zur Übertragung einer Menge von Daten von einer ersten Funkstation an eine zweite Funkstation, wobei nach der Übertragung der verschlüsselten Daten die erste Funkstation an die zweite Funkstation einen Schlüssel zum Entschlüsseln der übertragenen Daten überträgt.

Die DE 197 50 047 A offenbart eine Datenübertragung zwischen einer ersten und einer zweiten Funkstation, wobei die zweite Funkstation sich durch die Reichweite der ersten Funkstation bewegt und eine Reichweite hat, die kleiner als die der ersten Funkstation ist und die Datenübertragungen in Abhängigkeit des Abstands der Funkstationen unidirektional oder bidirektional ist.

### Vorteile der Erfindung

Erfindungsgemäß ist ein Verfahren zur Übertragung einer Menge von Daten von einer ersten Funkstation an eine zweite Funkstation vorgesehen, wobei die zweite Funkstation sich durch die Reichweite der ersten Funkstation bewegt und eine Reichweite hat, die kleiner als die der ersten Funkstation ist, mit der Übertragung der Daten in verschlüsselter Form von der ersten Funkstation an die zweite Funkstation während der Annäherung der zweiten Funkstation an die erste Funkstation begonnen wird, bevor die erste Funkstation sich in der Reichweite der zweiten Funkstation befindet, die zweite Funkstation nach dem vollständigen Empfang der verschlüsselten Daten die Übertragung eines Schlüssels zum Entschlüsseln der übertragenen Daten per Funk anfordert, und die erste Funkstation an die zweite Funkstation den angeforderten Schlüssel überträgt, wenn die erste Funkstation sich in der Reichweite der zweiten Funkstation befindet.

Eine besondere Anpassung des erfindungsgemäßen Verfahrens an den Betrieb mit einem Transponder als zweiter Funkstation ergibt sich insbesondere aus der Möglichkeit, mit der Übertragung der verschlüsselten Daten von der ersten Funkstation an die zweite zu beginnen, sobald die zweite Funkstation sich in der Reichweite der ersten befindet, jedoch bevor die erste Funkstation in der (kleineren) Reichweite der zweiten Funkstation liegt. Auf diese Weise kann ein äußerer Bereich der Reichweite der ersten Station, in dem keine Zweiweg-Kommunikation zwischen den Stationen möglich ist, zur Übertragung großer Mengen an verschlüsselten Daten genutzt werden. Sobald die Funkstationen sich einander so weit genähert haben, dass die erste in der Reichweite der zweiten liegt, kann letztere den Schlüssel von der ersten anfordern, um die empfangenen verschlüsselten Daten nutzen zu können. Dabei ist es nicht notwendig, dass die Entfernung zwischen den Funkstationen überwacht wird. Es genügt, wenn die zweite Funkstation, sobald sie die benötigten verschlüsselten Daten vollständig empfangen hat, damit beginnt, die Übertragung eines Schlüssels per Funk anzufordern. Falls zu diesem Zeitpunkt der Abstand zwischen den Stationen noch zu gross ist, so dass die erste Funkstation die Anforderung nicht empfängt, so kann die zweite die Anforderung so lange wiederholen, bis der Abstand klein genug geworden ist, um eine erfolgreiche Übertragung zu ermöglichen.

Durch eine Weiterbildung der Erfindung wird ein Verfahren zur Übertragung nur unter einer Bedingung wie etwa Zahlung einer Gebühr oder Nachweis einer Zugriffsberechtigung nutzbarer Daten und eine zur Durchführung des Verfahrens geeignete Funkstation geschaffen, die den Empfänger solcher Daten davor schützen, für eine Übertragung von Daten zahlen zu müssen, die schließlich ohne Nutzen für ihn scheitert, und die gleichzeitig verhindert, dass ausgestrahlte Daten von dritten Empfängern mitgehört und genutzt werden können, ohne dass deren Betreiber hierfür die vorgesehene Gebühr entrichten, beziehungsweise die die Übertragung von den großen Mengen von den nur nach Nachweis einer Zugriffsberechtigung nutzbaren Daten an einen Empfänger ermöglichen, auch wenn die Zeit, die zum Datenübertragen nach Nachweis der Zugriffsberechtigung zur Verfügung steht, kurz ist. Des weiteren ist das Verfahren besonders an die Anwendung im Rahmen eines DRSC-Systems angepaßt.

Die Vorteile werden zum Einen erreicht durch ein Datenübertragungsverfahren, bei dem die Daten zunächst in verschlüsselter Form von der ersten Funkstation, etwa einer Funkbake eines DSRC-Systems, an die zweite Funkstation, etwa eine OBU an Bord eines Fahrzeugs, übertragen werden; die zweite Funkstation die übertragenen Daten sammelt und nach dem Empfang dieser Daten einen Schlüssel anfordert, der ihr die Nutzung der Daten ermöglicht.

Die Schlüsselanforderung enthält zweckmäßigerweise eine Information, anhand derer die erste Funkstation die Identität der zweiten Funkstation bzw. einen Nachweis ihrer Berechtigung zum Zugriff auf die Daten entnehmen kann.

Im Fall kostenpflichtig zu nutzender Daten führt die zweite Funkstation nach Empfang der Daten zweckmäßigerweise erst eine Prüfung auf Vollständigkeit und eventuell auch auf Übertragungsfehler durch; wenn die Überprüfung eine hinreichende Vollständigkeit beziehungsweise Fehlerfreiheit der übertragenen Daten ergibt, so dass diese vom Empfänger genutzt werden können, fordert sie den Schlüssel von der ersten Funkstation an. Erst mit der Übertragung des Schlüssels, der zu ihrer Nutzung erforderlich ist, werden die übertragenen Daten in Rechnung gestellt.

Diese Vorgehensweise erlaubt es, die Daten in einer Form zu übertragen, in der sie von einer Vielzahl von Empfängern empfangbar sind, wobei diese Empfänger aber erst dann die verschlüsselten Daten nutzen können, wenn sie im Besitz eines Schlüssels sind. Da der Schlüssel selbst im Allgemeinen wesentlich kürzer ist als die zu entschlüsselnden Daten, ist bei seiner Übertragung die Gefahr gering, dass er aufgrund eines Abreißens der Funkverbindung nur unvollständig übertragen wird.

Die Übertragung der verschlüsselten Daten erfolgt vorzugsweise zyklisch und ohne Anforderung durch die zweite Funkstation. Dies erlaubt es einer Mehrzahl von zweiten Funkstationen, gleichzeitig die verschlüsselten Daten zu sammeln und zu entscheiden, ob die Übertragung eines Schlüssels angefordert werden soll, ohne dass jeweils eine zeitaufwendige, individuell an die einzelnen zweiten Funkstationen adressierte Übertragung erforderlich wird.

Zweckmäßigerweise erfolgt die Übertragung der verschlüsselten Daten unterteilt in eine Mehrzahl von Blöcken. Dies erleichtert die Überprüfung der Fehlerfreiheit und Vollständigkeit der übertragenen Daten, und es schafft darüber hinaus die Möglichkeit, dass die zweite Funkstation die Neuübertragung eines Blocks von der ersten Funkstation anfordern kann, wenn die Überprüfung die Fehlerhaftigkeit des Blocks ergibt.

Da die von der ersten Funkstation ausgestrahlten Daten zu mehreren unterschiedlichen Diensten gehören können, und der Betreiber der zweiten Funkstation nicht notwendigerweise an allen diesen Diensten interessiert ist, wird zweckmäßigerweise eine Information über den Typ der verschlüsselten Daten in unverschlüsselter Form übertragen, der es der zweiten Funkstation ermöglicht, zwischen den Daten verschiedener Dienste zu unterscheiden. Dies ermöglicht es der zweiten Funkstation insbesondere, nur diejenigen Teile eines von der ersten Funkstation übertragenen verschlüsselten Datenstroms auszuwählen und zu sammeln, die einen ausgewählten Typ haben, das heißt zum Beispiel die zu einem vom Betreiber der zweiten Funkstation ausgewählten Dienst gehören. Da auf diese Weise nicht der gesamte verschlüsselte Datenstrom gesammelt werden muss, wird Speicherkapazität an der zweiten Funkstation eingespart.

Eine zur Durchführung des Verfahrens geeignete zweite Funkstation muss einen Speicher mit einer ausreichenden Kapazität aufweisen, um die gesamte verschlüsselte Datenmenge, die sich über eine Vielzahl von Blöcken erstrecken kann, aufnehmen zu können. Außerdem benötigt sie einen Decoder zur Entschlüsselung der im Speicher enthaltenen Informationen nach Empfang eines Schlüssels.

Weitere Merkmale und Vorteile der Erfindung ergeben sich aus der nachfolgenden Beschreibung von Ausführungsbeispielen mit Bezug auf die beigefügten Zeichnungen.

Es zeigen:
- Fig. 1: veranschaulicht das Prinzip der Daten- übertragung zwischen einer ersten Funk- station in Gestalt einer Funkbake und ei- ner zweiten Funkstation in Gestalt einer OBU an Bord eines Fahrzeugs im Rahmen ei- nes DSRC-Systems;
- Fig. 2: veranschaulicht die Zweiteilung der Reichweite der Funkbake in einen unidi- rektionalen und einen bidirektionalen Ü- bertragungsbereich;
- Fig. 3: veranschaulicht die zeitliche Nutzung einer Übertragungsfrequenz in einem herkömmlichen DSRC-System;
- Fig. 4: veranschaulicht die zeitliche Nutzung der Übertragungsfrequenz gemäss dem erfindungsgemäßen Verfahren; und
- Fig. 5: veranschaulicht ein mögliches Format der Beacon-Service-Table (BST) gemäß dem erfindungsgemäßen Verfahren.

### Beschreibung der Ausführungsbeispiele

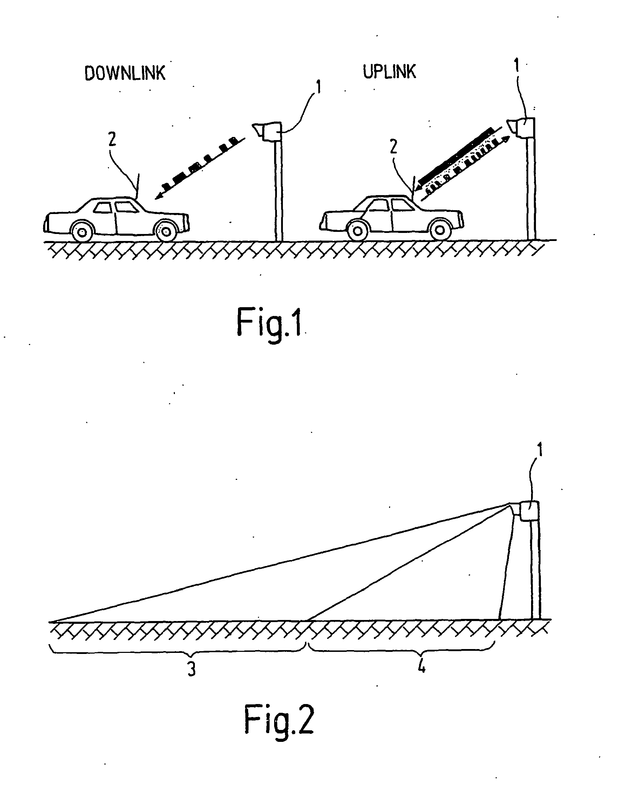

Fig. 1 zeigt ein Anwendungsbeispiel des erfindungsgemäßen Verfahrens bei der Kommunikation einer ersten Funkstation in Gestalt einer Funkbake 1 mit einer zweiten Funkstation in Gestalt einer an einem Fahrzeug mitgeführten OBU 2. Die Kommunikation zwischen den zwei Funkstationen findet im Zeitmultiplex statt. Dies bedeutet, dass die Übertragungszeit in Zeitschlitze aufgeteilt ist, die jeweils entweder der Übertragung von der Bake 1 zur OBU 2, dem sogenannten Downlink, oder von der OBU 2 zur Bake 1, dem Uplink, zugeordnet sind. Die Datenübertragung im Downlink geschieht zum Beispiel mittels ASK-Modulation (Amplitude Shift Keying). Bei der Datenübertragung von der OBU 2 zur Bake 1 arbeitet die OBU 2 im Transponderverfahren. Dabei sendet die Bake 1 im Uplink-Zeitschlitz ein unmoduliertes Trägersignal, das beim DSRC-System eine Frequenz von 5,8 GHz hat. Dieses Trägersignal wird von der OBU moduliert und zur Bake zurückgesendet.

Aus der Anwendung des Transponderprinzips resultiert, dass im Uplink-Betrieb die Streckendämpfung doppelt vorhanden ist, und dass dann die OBU 2 notwendigerweise eine kleinere Reichweite als die Bake 1 hat. Das heißt, bei Annäherung eines Fahrzeugs an eine Funkbake kann die OBU 2 Daten bereits fehlerfrei empfangen, lange bevor das Fahrzeug der Bake 1 nahe genug gekommen ist, um ein Antwortsignal von der OBU 2 an die Bake 1 zurück übertragen zu können. Innerhalb der Reichweite der Bake 1 ergeben sich somit zwei in Fig. 2 dargestellte Zonen mit unterschiedlichen Kommunikationseigenschaften, eine äußere Zone 3, in der nur unidirektionale Downlink-Übertragung möglich ist, und eine innere Zone 4, deren Abmessungen der Reichweite der OBU 2 entsprechen, und in der bidirektionale Übertragung zwischen Bake 1 und OBU 2 möglich ist.

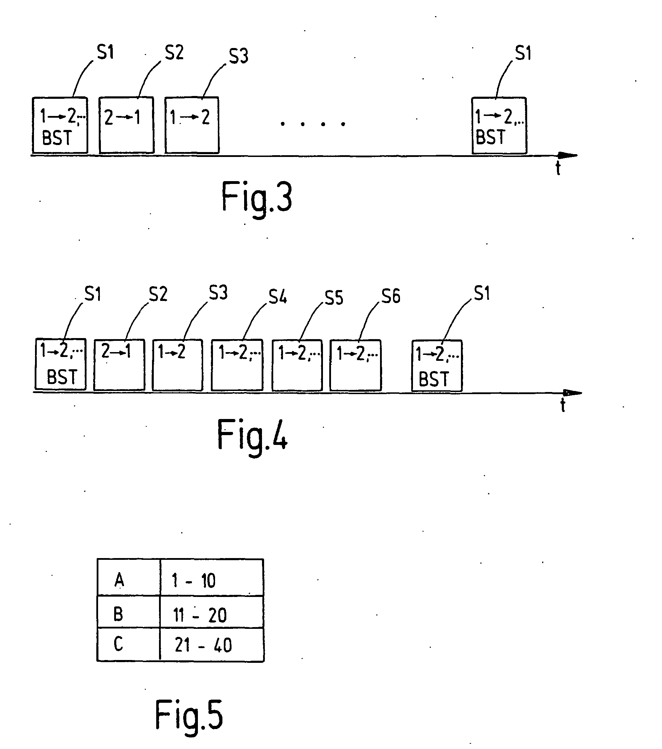

Herkömmliche DSRC-Systeme, die z.B. zur automatischen Erhebung von Straßenbenutzungsgebühren eingesetzt werden, nutzen lediglich den hier als innere Zone 4 bezeichneten Bereich.
Ein typisches Rahmenformat für die Kommunikation zwischen Bake 1 und OBU 2 im Rahmen eines herkömmlichen DSRC-Systems ist in Fig. 3 gezeigt. Die sich periodisch wiederholenden Rahmen sind in eine Mehrzahl von Zeitschlitzen S1, S2, S3 ... unterteilt, wobei ein erster Zeitschlitz S1 von der Bake genutzt wird, um ein Datenpaket mit einer als Beacon-Service-Table BST bezeichneten Information unadressiert, das heißt als Broadcast, an alle sich in ihrer Reichweite befindlichen OBUs auszustrahlen, in der sie die von ihr angebotenen Dienste bzw. die Typen der von ihr ausgestrahlten Daten bezeichnet.

Der Zeitschlitz S1 ist in der Figur mit der Beschriftung "1->2,..." versehen, um anzudeuten, dass derin diesem Zeitschlitz von der Bake 1 gesendete Datenblock von der OBU 2 und auch von anderen OBUs empfangbar und auswertbar ist.

Eine OBU, die einen angebotenen Dienst wahrnehmen will, das heißt die einen oder mehreren dieser Typen von Daten empfangen will, sendet im Zeitschlitz S2 einen Anfrageblock an die Bake 1, die daraufhin ab dem Zeitschlitz S3 mit einem (oder mehreren) Downlink-Datenpaketen antwortet, in denen die von der OBU nachgefragten Datentypen übertragen werden. Die Zeitschlitze S2, S3 sind dementsprechend in der Figur mit "2->1" beziehungsweise "1->2" beschriftet.

Zeitschlitze, in denen die Bake 1 keine Daten zu übertragen hat und die OBUs keine Daten anfordern, bleiben unbenutzt.

Bei dem in Fig. 4 gezeigten, erfindungsgemäßen Rahmenformat entsprechen die Zeitschlitze S1 bis S3 denen der Fig. 3. Die ungenutzt gebliebenen Zeitschlitze, hier mit S4 bis S6 bezeichnet, werden nun eingesetzt, um Daten, deren Nutzung kostenpflichtig ist, in verschlüsselter Form paketweise als Broadcast-Nachrichten auszustrahlen, so dass sie von jeder OBU empfangen werden können, die sich in Reichweite der Bake aufhält. Diese verschlüsselten Daten können mehreren unterschiedlichen Typen angehören. Beispiele für solche Datentypen sind digitalisierte Landkarteninformationen, Straßenzustandsinformationen, die Auskunft über Staus oder ähnliche Verkehrsbehinderungen und Möglichkeiten zu ihrer Umgehung geben; Abfahrtpläne öffentlicher Verkehrsmittel, z.B. eines in der Nähe der Bake befindlichen Park-and-Ride-S-Bahnhofs, eines interregionalen Bahnhofs, eines Flughafens oder dergleichen, Börseninformationen, Internet-Seiten, Audio- und Videodateien etc..

Eine Information über die Zugehörigkeit jedes dieser Broadcast-Pakete zu einem Datentyp wird in unverschlüsselter Form in der im Zeitschlitz S1 übertragenen Beacon-Service-Table BST angegeben.

Ein Beispiel für ein Format der Beacon-Service-Table ist in Fig. 5 gezeigt. Diese Tabelle umfasst eine Mehrzahl von Zeilen, eine pro Datentyp, wobei jede Zeile eine Bezeichnung des Datentyps, hier A, B oder C, sowie die Angabe der Zeitschlitze des nachfolgenden Rahmens enthält, in denen die Daten des betreffenden Typs übertragen werden. Der Datentyp A wird in den Broadcast-Zeitschlitzen 1 bis 10 nach Übertragung des Broadcast-Zeitschlitzes S1 mit der BST übertragen, der Datentyp B in den Broadcast-Zeitschlitzen 11 bis 20 und Typ C in den Zeitschlitzen 21 bis 40.

Die Arbeitsweise einer OBU bei Annäherung an eine Funkbake ist wie folgt: Wenn ein Fahrzeug mit der OBU 2 in die äußere Zone 3 der Bake 1 eintritt, beginnt die OBU 2, sich auf die Rahmenstruktur des Downlink-Signals zu synchronisieren. So ist sie in der Lage, eine Beacon-Service-Table BST zu erkennen, die von der Bake 1 zyklisch, jeweils im ersten Zeitschlitz S1 jedes Rahmens, ausgestrahlt wird.

Anhand der Beacon-Service-Table BST erkennt die OBU 2 die von der Bake 1 angebotenen Datentypen und vergleicht diese mit einer von einem Benutzer vorgegebenen Liste von Datentypen, die empfangen werden sollen. Wenn zu empfangende Datentypen in der Beacon-Service-Table enthalten sind, wählt die OBU 2 anhand der Information der BST unter den von der Bake 1 ausgestrahlten Broadcast-Paketen diejenigen aus, die Daten vom gewünschten Typ enthalten, und speichert diese.

Wenn die OBU 2 alle Pakete empfangen hat, die in der BST als zu einem Datentyp gehörig angegeben sind, so erkennt sie daran, dass die Daten des gewünschten Typs vollständig empfangen worden sind. Sie beginnt daraufhin, eine Anforderung zur Übersendung eines Schlüssels an die Bake 1 auszustrahlen. Falls die gesammelten Daten von einem Typ sind, für dessen Nutzung eine Zugriffsberechtigung nachzuweisen ist, überträgt die OBU 2 mit der Anforderung ein vorvereinbartes, von mehreren OBUs nutzbares Codewort, an der die Funkbake 1 die Berechtigung der OBU 2 zur Nutzung der Daten erkennen kann. Wenn es sich um kostenpflichtig nutzbare Daten handelt, sendet die OBU 2 eine für sie charakteristische Identifizierungsinformation.

Falls die OBU 2 sich noch in der äußeren Zone 3 befindet, ist die Bake 1 nicht in der Lage, die Anforderung zu empfangen. Sie bleibt daher unbeantwortet und wird von der OBU 2 während einer vorgegebenen Zeitspanne periodisch wiederholt. Wenn im Laufe dieser Zeitspanne die OBU 2 in die innere Zone 3 eintritt, wird die Anforderung beantwortet, die Bake 1 sendet einen Schlüssel zum Entschlüsseln der zwischengespeicherten Daten an die OBU 2, und gleichzeitig wird anhand der mit der Anforderung von der OBU 2 an die Bake 1 übertragenen Identifizierungsinformation eine Gebührenaufzeichnung erzeugt, um dem Betreiber der OBU die übertragenen Daten in Rechnung stellen zu können.

Der Schlüssel kann in der Bake 1 anhand der mit der Anforderung übertragenen Identifizierungsinformation spezifisch für diese eine OBU 2 verschlüsselt werden, so dass nur die anfordernde OBU 2 ihn entschlüsseln und zum Entschlüsseln der Daten gebrauchen kann.

Wenn die Anforderung der OBU 2 während der vorgegebenen Zeitspanne unbeantwortet bleibt, so wird angenommen, dass die OBU 2 den inneren Bereich 4 bereits wieder verlassen hat und dass folglich mit der Übertragung eines Schlüssels von der Bake 1 nicht mehr zu rechnen ist, und das Aussenden der Anforderung wird abgebrochen.

Diverse Abwandlungen des oben beschriebenen Verfahrens sind möglich. So kann z.B. auf die Übertragung einer Beacon-Service-Table BST in der oben in Bezug auf Fig. 5 beschriebenen Form verzichtet werden, falls nur Daten eines einzigen Typs von der Bake ausgestrahlt werden. Denkbar ist auch, Daten unterschiedlicher Typen in Broadcast-Blöcken auszustrahlen, ohne dass vorher eine Information über die Zugehörigkeit der Blöcke zu den diversen Datentypen ausgestrahlt wird. In diesem Fall ist die OBU 2 gezwungen, die gesamten von der Bake 1 ausgestrahlten Broadcast-Daten zu sammeln und bei Vollständigkeit einen Schlüssel von der Bake 1 unter gleichzeitiger Angabe der gewünschten, zu entschlüsselnden Datentypen anzufordern, für die der Schlüssel passen soll. Ein solches Verfahren ist zwar geringfügig einfacher, erfordert aber eine höhere Speicherkapazität an der OBU für die verschlüsselten Daten.

Eine weitere Alternative ist die, jeden Broadcast-Datenblock mit einer unverschlüsselten Angabe des Typs der darin enthaltenen Daten auszustrahlen. Die OBU muss dann in jedem empfangenen Broadcast-Datenblock diese Typangabe auswerten, und sie speichert den Datenblock, wenn der angegebene Typ einem vom Benutzer spezifiziertem Typ entspricht. Um der OBU 2 eine Vollständigkeitskontrolle zu ermöglichen, versieht die Bake 1 die Pakete eines Typs jeweils mit unverschlüsselten laufenden Nummern, deren Zählung jeweils mit dem ersten Block eines Datentyps beginnt, und einer gesonderten Kennzeichnung des letzten Blocks jedes Typs.

Da die Zahl von Anfragen, die eine Bake 1 im Laufe eines Zeitrahmens erhält und mit adressierten Paketen beantworten muss, variabel ist, kann sich die Zahl der Zeitschlitze, die für die verschlüsselte Broadcast-Übertragung von Daten zur Verfügung stehen, von einem Rahmen zum nächsten ändern. Dies ist jedoch für das erfindungsgemäße Verfahren nicht weiter kritisch. Wenn man annimmt, dass entsprechend dem Beispiel der Fig. 5 drei verschiedene Datentypen A, B, C übertragen werden und in einem Rahmen bis zu 40 Zeitschlitze für die Broadcast-Übertragung zur Verfügung stehen können, so hat dies die Folge, dass in einem Rahmen, in dem viele Zeitschlitze für adressierte Kommunikationbenötigt werden, die Zahl der verbleibenden freien Zeitschlitze nicht mehr ausreicht, um die Daten des Typs C vollständig zu übertragen. Die Daten der Typen A, B jedoch konnten von allen OBUs innerhalb der Reichweite der Bake 1 empfangen werden. Im nachfolgenden Zeitrahmen tauschen die Datentypen zyklisch ihre Plätze, d.h. der Typ C wird in Broadcast-Zeitschlitzen 1 - 20, Typ A in Zeitschlitzen 21 - 30 und Typ B in Zeitschlitzen 31 - 40 übertragen. Der im Laufe des vorhergehenden Rahmens unvollständig übertragene Datentyp C kommt nun an erster Stelle, so dass er mit der größten Wahrscheinlichkeit vollständig gesendet werden kann. So kann die zur Verfügung stehende Übertragungszeit effizient genutzt werden.

Denkbar ist auch die Übertragung von Paketen, die in einem gegebenen Rahmen keinen Platz gefunden haben, im darauffolgenden Rahmen nachzuholen. Bezogen auf das Zahlenbeispiel der Fig. 5 bedeutet dies: Wenn in dem auf die Übertragung der BST der Fig. 5 folgenden Rahmen lediglich 38 Broadcast-Blöcke übertragen werden können, d.h. wenn die Blöcke 39 und 40 des Datentyps C in diesem Rahmen unübertragen bleiben, so kann deren Übertragung im darauffolgenden Rahmen als dessen erster und zweiter Broadcast-Block nach dem BST-Block zu Beginn des Rahmens erfolgen. Die BST dieses nachfolgenden Rahmens kann dann z.B. für den Datentyp A die im Anschluss an diese zwei Blöcke verfügbaren Zeitschlitznummern 3 - 12, für den Typ B Nummern 13 - 22 und für Typ C 23 - 42 spezifizieren. Dabei kann die letzte für den zuletzt übertragenen Datentyp spezifizierte Blocknummer (hier 42 für Typ C) durchaus größer sein als die Gesamtzahl der Zeitschlitze eines Rahmens.

Wie man leicht sieht, ist es mit den oben beschriebenem Verfahren leicht möglich, größere Mengen von verschlüsselten Daten verschiedener Typen zu übertragen, als in einem einzigen Rahmen Platz finden können. Wie groß diese Datenmenge ist, richtet sich nach der Reichweite der Bake 1 und der erwarteten Aufenthaltsdauer der OBU's in der Reichweite der Bake.

## Patentansprüche

1. Verfahren zur Übertragung einer Menge von Daten von einer ersten Funkstation (1) an eine zweite Funkstation (2), wobei
- die zweite Funkstation (2) sich durch die Reichweite der ersten Funkstation (1) bewegt und eine Reichweite hat, die kleiner als die der ersten Funkstation (1) ist,
- mit der Übertragung der Daten in verschlüsselter Form von der ersten Funkstation (1) an die zweite Funkstation (2) während der Annäherung der zweiten Funkstation (2) an die erste Funkstation (1) begonnen wird, bevor die erste Funkstation (1) sich in der Reichweite (4) der zweiten Funkstation (2) befindet,
- die zweite Funkstation (2) nach dem vollständigen Empfang der verschlüsselten Daten die Übertragung eines Schlüssels zum Entschlüsseln der übertragenen Daten per Funk anfordert, und
- die erste Funkstation (1) an die zweite Funkstation (2) den angeforderten Schlüssel überträgt, wenn die erste Funkstation (1) sich in der Reichweite der zweiten Funkstation (2) befindet.

2. Verfahren nach Anspruch 1, **dadurch gekennzeichnet, dass** die zweite Funkstation (2) an die erste Funkstation (1) durch Modulieren eines von der ersten Funkstation ausgestrahlten Trägers überträgt.

3. Verfahren nach Anspruch 1 oder 2, **dadurch gekennzeichnet, dass** die zweite Funkstation (2) die Neuübertragung fehlerhaft empfangener, Daten enthaltener Blöcke von der ersten Funkstation (1) anfordert, wenn diese sich in ihrer Reichweite befindet.

4. Verfahren nach Anspruch 1, 2 oder 3, **dadurch gekennzeichnet, dass** es zur Datenübertragung zu einer zweiten Funkstation (2) an Bord eines Fahrzeugs eingesetzt wird.

5. Verfahren nach Anspruch 1, **dadurch gekennzeichnet, dass** ein Sammeln von übertragenen Daten der ersten Funkstation (1) an der zweiten Funkstation (2) erfolgt.

6. Verfahren nach Anspruch 5, **dadurch gekennzeichnet, dass** die Daten unter einer Bedingung nutzbar sind und dass, wenn die Bedingung der Nachweis einer Zugriffsberechtigung ist, der Nachweis bei der Anforderung des Schlüssels geführt wird.

7. Verfahren nach Anspruch 5, **dadurch gekennzeichnet, dass** die Daten unter einer Bedingung nutzbar sind und dass, wenn die Bedingung die Entrichtung einer Gebühr ist, die Gebühr mit Übertragung des Schlüssels in Rechnung gestellt wird.

8. Verfahren nach Anspruch 7, **dadurch gekennzeichnet, dass** die Übertragung des Schlüssels nur angefordert wird, wenn eine Überprüfung eine hinreichende Vollständigkeit und/oder Fehlerfreiheit der übertragenen Daten ergeben hat.

9. Verfahren nach einem der Ansprüche 1 oder 5 bis 8 , **dadurch gekennzeichnet, dass** die Übertragung der verschlüsselten Daten zyklisch und ohne Anforderung durch die zweite Funkstation (2) erfolgt.

10. Verfahren nach einem der Ansprüche 1 oder 5 bis 9, **dadurch gekennzeichnet, dass** die Übertragung der verschlüsselten Daten in eine Mehrzahl von Blöcken unterteilt erfolgt.

11. Verfahren nach Anspruch 10, **dadurch gekennzeichnet, dass**, wenn die Überprüfung die Fehlerhaftigkeit eines Blocks ergibt, die zweite Funkstation (2) die Neuübertragung des Blocks von der ersten Funkstation (1) anfordert.

12. Verfahren nach einem der Ansprüche 1 oder 5 bis 11, **dadurch gekennzeichnet, dass** die Übertragung im Zeitmultiplex erfolgt.

13. Verfahren nach nach einem der Ansprüche 1 oder 12, **dadurch gekennzeichnet, dass** ein Rahmenformat verwendet wird, das Broadcast-Übertragung eines Paketes an eine Mehrzahl von zweiten Funkstationen und adressierte Übertragung an eine einzelne zweite Funkstation unterstützt, und dass die kostenpflichtig nutzbaren Daten per Broadcast übertragen werden.

14. Verfahren nach einem der Ansprüche 1 oder 5 bis 13, **dadurch gekennzeichnet, dass** eine Information (BST) über einen Typ der verschlüsselten Daten in unverschlüsselter Form übertragen wird.

15. Verfahren nach Anspruch 14, **dadurch gekennzeichnet, dass** die zweite Funkstation (2) anhand der Information (BST) über den Typ der verschlüsselten Daten nur Teile eines von der ersten Funkstation (1) übertragenen Datenstroms zum Sammeln auswählt.

16. Funkstation zur Durchführung eines Verfahrens nach einem der vorhergehenden Ansprüche als zweite Funkstation, mit einem Speicher für die Zwischenspeicherung der verschlüsselt übertragenen Daten und einem Decodierer zur Entschlüsselung der im Speicher enthaltenen Informationen nach Empfang eines Schlüssels, **gekennzeichnet durch** einen **durch** ein externes Trägersignal erregten Transponder und eine Einrichtung zur Überprüfung der Vollständigkeit der im Zwischenspeicher gespeicherten Daten.

## Claims

1. Method for transmitting a volume of data from a first radio station (1) to a second radio station (2), wherein
- the second radio station (2) is moving through the range of the first radio station (1) and has a range which is shorter than that of the first radio station (1),
- the transmission of the data in encrypted form from the first radio station (1) to the second radio station (2) is started while the second radio station (2) is approaching the first radio station (1), before the first radio station (1) is in the range (4) of the second radio station (2),
- the second radio station (2), having completely received the encrypted data, requests the transmission of a key for decrypting the transmitted data by radio, and
- the first radio station (1) transmits the requested key to the second radio station (2) when the first radio station (1) is in the range of the second radio station (2).

2. Method according to Claim 1, **characterized in that** the second radio station (2) transmits to the first radio station (1) by modulating a carrier which is emitted by the first radio station.

3. Method according to Claim 1 or 2, **characterized in that** the second radio station (2) requests the retransmission of erroneously received blocks containing data from the first radio station (1) when the latter is in the range of said second radio station.

4. Method according to Claim 1, 2 or 3, **characterized in that** it is used for data transmission to a second radio station (2) on board a vehicle.

5. Method according to Claim 1, **characterized in that** transmitted data from the first radio station (1) are collected on the second radio station (2).

6. Method according to Claim 5, **characterized in that** the data can be used under a condition and **in that**, if the condition is proof of access authorization, the proof is provided when the key is requested.

7. Method according to Claim 5, **characterized in that** the data can be used under a condition and **in that**, if the condition is payment of a fee, the fee is invoiced when the key is transmitted.

8. Method according to Claim 7, **characterized in that** the transmission of the key is requested only if the result of a check has been that the transmitted data are sufficiently complete and/or free of error.

9. Method according to one of Claims 1 and 5 to 8, **characterized in that** the encrypted data are transmitted cyclically and without request by the second radio station (2).

10. Method according to one of Claims 1 and 5 to 9, **characterized in that** the encrypted data are transmitted in a manner divided into a plurality of blocks.

11. Method according to Claim 10, **characterized in that** if the result of the check is that a block is erroneous then the second radio station (2) requests the retransmission of the block from the first radio station (1).

12. Method according to one of Claims 1 and 5 to 11, **characterized in that** the transmission is effected using time-division multiplexing.

13. Method according to either of Claims 1 and 12, **characterized in that** a frame format is used which supports broadcast transmission of a packet to a plurality of second radio stations and addressed transmission to a single second radio station, and **in that** the free-to-use data are transmitted by broadcast.

14. Method according to one of Claims 1 and 5 to 13, **characterized in that** a piece of information (BST) about a type of the encrypted data is transmitted in unencrypted form.

15. Method according to Claim 14, **characterized in that** the second radio station (2) uses the information (BST) about the type of the encrypted data to select only portions of a data stream transmitted by the first radio station (1) for collection.

16. Radio station for carrying out a method according to one of the preceding claims as a second radio station, having a memory for buffer-storing the data transmitted in encrypted form and a decoder for decrypting the information contained in the memory following reception of a key, **characterized by** a transponder, which is excited by an external carrier signal, and a device for checking the completeness of the data stored in the buffer store.

## Revendications

1. Procédé de transmission d'un volume de données d'une première station hertzienne (1) à une deuxième station hertzienne (2),
- la deuxième station hertzienne (2) se déplaçant à travers la zone de portée de la première station hertzienne (1) et possédant une portée qui est inférieure à celle de la première station hertzienne (1),
- la transmission des données sous forme cryptée de la première station hertzienne (1) à la deuxième station hertzienne (2) pendant l'approche de la deuxième station hertzienne (2) de la première station hertzienne (1) étant commencée avant que la première station hertzienne (1) ne se trouve à la portée (4) de la deuxième station hertzienne (2),
- la deuxième station hertzienne (2), après la réception complète des données cryptées, demandant par voie hertzienne la transmission d'une clé pour décrypter les données transmises, et
- la première station hertzienne (1) transmettant la clé demandée à la deuxième station hertzienne (2) lorsque la première station hertzienne (1) se trouve à la portée de la deuxième station hertzienne (2).

2. Procédé selon la revendication 1, **caractérisé en ce que** la deuxième station hertzienne (2) transmet à la première station hertzienne (1) en modulant une porteuse émise par la première station hertzienne.

3. Procédé selon la revendication 1 ou 2, **caractérisé en ce que** la deuxième station hertzienne (2) demande une nouvelle transmission par la première station hertzienne (1) de blocs contenant des données reçues erronées si celle-ci se trouve à sa portée.

4. Procédé selon la revendication 1, 2 ou 3, **caractérisé en ce qu'**il est utilisé pour la transmission de données à une deuxième station hertzienne (2) à bord d'un véhicule.

5. Procédé selon la revendication 1, **caractérisé en ce qu'**une collecte de données transmises de la première station hertzienne (1) à la deuxième station hertzienne (2) est effectuée.

6. Procédé selon la revendication 5, **caractérisé en ce que** les données sont utilisables sous une condition et **en ce que** lorsque la condition est la preuve d'une autorisation d'accès, la preuve est produite lors de la demande de la clé.

7. Procédé selon la revendication 5, **caractérisé en ce que** les données sont utilisables sous une condition et **en ce que** lorsque la condition est le paiement d'une taxe, la taxe est facturée lors de la transmission de la clé.

8. Procédé selon la revendication 7, **caractérisé en ce que** la transmission de la clé n'est demandée que lorsque le contrôle a donné lieu à une intégrité suffisante et/ou à une absence d'erreur des données transmises.

9. Procédé selon l'une des revendications 1 ou 5 à 8, **caractérisé en ce que** la transmission des données cryptées s'effectue de manière cyclique et sans demande de la part de la deuxième station hertzienne (2).

10. Procédé selon l'une des revendications 1 ou 5 à 9, **caractérisé en ce que** les données cryptées sont transmises divisées en une pluralité de blocs.

11. Procédé selon la revendication 10, **caractérisé en ce que** lorsque le contrôle révèle la présence d'une erreur dans un bloc, la deuxième station hertzienne (2) demande une nouvelle transmission du bloc par la première station hertzienne (1).

12. Procédé selon l'une des revendications 1 ou 5 à 11, **caractérisé en ce que** la transmission s'effectue en multiplexage temporel.

13. Procédé selon l'une des revendications 1 ou 12, **caractérisé en ce qu'**un format de trame est utilisé qui prend en charge la transmission de diffusion d'un paquet vers une pluralité de deuxièmes stations hertziennes et la transmission adressée à une seule deuxième station hertzienne, et **en ce que** les données utiles payantes sont transmises par baladodiffusion.

14. Procédé selon l'une des revendications 1 ou 5 à 13, **caractérisé en ce qu'**une information (BST) sur un type de données cryptées est transmise sous forme non cryptée.

15. Procédé selon la revendication 14, **caractérisé en ce que** la deuxième station hertzienne (2) sélectionne, au moyen de l'information (BST) sur le type de données cryptées, seulement des parties d'un flux de données transmis par la première station hertzienne (1) pour sa collecte.

16. Station hertzienne pour mettre en oeuvre un procédé selon l'une des revendications précédentes en tant que deuxième station hertzienne, comprenant une mémoire pour le stockage temporaire des données transmises cryptées et un décodeur pour décrypter les informations contenues dans la mémoire après la réception d'une clé, **caractérisée par** un transpondeur excité par un signal porteur externe et un dispositif pour contrôler l'intégrité des données enregistrées dans la mémoire temporaire.
